# EUROPÄISCHE PATENTSCHRIFT

(11) **EP 3 888 870 B1**
(45) Veröffentlichungstag und Bekanntmachung des Hinweises auf die Patenterteilung: **07.06.2023**
(21) Anmeldenummer: 21151148.0
(22) Anmeldetag: 12.01.2021
(51) Int. Cl.: B29C 45/14, G02C 5/22, B29C 45/36, B29L 12/00, B29L 31/16, B29C 45/26, B29C 45/33

(54) **VERFAHREN ZUM HERSTELLEN EINES SCHARNIERTEILS EINES BRILLENSCHARNIERS**
METHOD FOR MANUFACTURING A HINGE PART OF A SPECTACLE HINGE
PROCÉDÉ DE FABRICATION D'UNE PARTIE CHARNIÈRE D'UNE CHARNIÈRE DE LUNETTES

(30) Priorität: 31.03.2020 AT 502652020
(43) Veröffentlichungstag der Anmeldung: 06.10.2021
(73) Patentinhaber: REDTENBACHER Präzisionsteile Ges.m.b.H., 4644 Scharnstein (AT)
(72) Erfinder: Almhofer, Daniel, 4643 Pettenbach (AT)
(74) Vertreter: Hübscher & Partner Patentanwälte GmbH

(56) Entgegenhaltungen:
- DE-A1-102017 200 882
- DE-U1- 7 729 345
- US-A- 2 939 168

## Beschreibung

Die Erfindung bezieht sich auf ein Verfahren zum Herstellen eines Scharnierteils eines Brillenscharniers mit wenigstens zwei Scharnierlappen, mit Scharnieraugen der Scharnierlappen auskleidenden Kunststoffbuchsen und mit über die Scharnierlappen vorstehenden Reibflanschen, wobei die Scharnieraugen der Scharnierlappen zur Ausbildung der Kunststoffbuchsen und Reibflansche in einem die ineinander übergehenden Formräume für die Kunststoffbuchsen und Reibflansche vorgebenden Formwerkzeug mit einer Kunststoffschmelze ausgespritzt werden.

Zur Gangregulierung von Brillenscharnieren ist es bekannt (DE 23 56 818 A1, DE 77 29 345 111), den zwischen zwei Scharnierlappen des einen äußeren Scharnierteils eingreifenden mittleren Scharnierlappen des anderen inneren Scharnierteils beidseitig mit einem Reibflansch aus Kunststoff zu versehen, sodass beim Anziehen einer die Scharnierachse ergebenden Scharnierschraube, die die Scharnierlappen in Scharnieraugen durchsetzt und in ein Gewinde eines der beiden äußeren Scharnierlappen eingreift, die beiden äußeren Scharnierlappen gegen den mittleren Scharnierlappen und damit an die Reibflansche des mittleren Scharnierlappens gedrückt werden. Damit wird eine Reibung zwischen den metallischen Scharnierlappen der äußeren und inneren Scharnierteile unterbunden und die Gängigkeit des Brillenscharniers über das Anzugmoment der Scharnierschraube einstellbar.

Um die Halterung der Reibflansche zu sichern und eine weitgehend spielfreie Führung der Scharnierschraube zu ermöglichen, können die Reibflansche mit in das Lagerauge eingreifenden Kragen versehen werden, wobei sich allerdings besonders günstige Fertigungsbedingungen ergeben, wenn die beiden Reibflansche und eine das Lagerauge des mittleren Scharnierlappens auskleidende Kunststoffbuchse zwischen den beiden Reibflanschen in einem Formwerkzeug, das die ineinander übergehenden Formräume für die Kunststoffbuchsen und Reibflansche vorgibt, an den Scharnierlappen angespritzt werden. Da dieser Scharnierlappen des inneren Scharnierteils zum Anspritzen der Kunststoffteile von beiden Seiten frei zugänglich ist, können die Reibflansche und die sie verbindende Kunststoffbuchse in einem Arbeitsgang in einem vergleichsweise einfachen Formwerkzeug an den Scharnierlappen angespritzt werden. Dies ist jedoch bei mehrlappigen inneren Scharnierteilen, die mit Reibflanschen zur Gangregulierung ausgestattet werden sollen, nicht der Fall, sodass aufgrund des Herstellungsaufwands bei solchen mehrlappigen, zumindest aus fünf Scharnierlappen bestehenden Brillenscharnieren üblicherweise auf eine Gangregulierung verzichtet wird.

Bei einem Brillenscharnier aus zwei miteinander durch eine Scharnierschraube verbundenen Scharnierteilen, von denen der die Scharnierschraube in einem Gewinde eines äußeren Scharnierlappens aufnehmende äußere Scharnierteil wenigstens drei Scharnierlappen aufweist, zwischen denen die Scharnierlappen des anderen inneren Scharnierteils auf der Scharnierschraube als Scharnierachse drehbar gelagert sind, ist es zur Gangregulierung bekannt (US 2 939 168 A), die Scharnierschraube durch eine Kunststoffhülse zu führen, die sich axial einerseits am Scharnierlappen mit dem Gewinde und anderseits am Kopf der Scharnierschraube abstützt. Aufgrund einer Überlänge wird die Kunststoffhülse beim Anziehen der Scharnierschraube unter einer radialen Aufweitung axial mit der Wirkung zusammengedrückt, dass sich die Reibung zwischen der Kunststoffhülse und den Lochwandungen der Scharnieraugen vergrößert.

Es wurde bereits vorgeschlagen (DE 10 2019 202 250 A1), für den inneren Scharnierteil von einem einlappigen Rohling auszugehen und an diesen Rohling die Reibflansche und die sie verbindende Kunststoffbuchse in einem Arbeitsgang anzuspritzen, bevor aus dem einlappigen Rohling ein mehrlappiger Scharnierteil durch Trennschnitte gefertigt wird, allerdings mit dem Nachteil, dass die durch die Trennschnitte ebenfalls unterteilte Kunststoffbuchse bündig mit den ausgeschnittenen Scharnierlappen abschließt. Dies bedeutet, dass die Scharnierlappen des äußeren Scharnierteils mit seitlichem Spiel zwischen die Scharnierlappen des inneren Scharnierteils eingreifen müssen, um eine Reibung zwischen metallischen Scharnierteilen zu vermeiden.

Eine andere Möglichkeit, bei einem zweilappigen Scharnierteil an die Scharnieraugen Kunststoffbuchsen mit Reibflanschen anzuspritzen, besteht darin (DE 10 2017 200 882 A1), die aus einem gemeinsamen ebenen Blech ausgestanzten, durch einen Steg miteinander verbundenen Scharnierlappen im Bereich der Scharnieraugen mit Kunststoff zu umspritzen, bevor sie gegenüber dem Steg aus der Stanzebene ausgebogen werden.

Der Erfindung liegt somit die Aufgabe zugrunde, für den inneren Scharnierteil, der mit wenigstens zwei Scharnierlappen auf der im anderen äußeren Scharnierteil drehfest gehaltenen Scharnierschraube drehbar gelagert ist, ein Verfahren vorzusehen, mit dessen Hilfe an den Scharnierlappen entsprechende Reibflansche und Kunststoffbuchsen in einem Arbeitsgang angespritzt werden können, und zwar unter Einsatz eines vergleichsweise wenig aufwendigen Formwerkzeugs.

Ausgehend von einem Verfahren der eingangs geschilderten Art löst die Erfindung die gestellte Aufgabe dadurch, dass bei einer stirnseitigen Abdeckung der Formräume für die Kunststoffbuchsen durch einen zwischen die Scharnierlappen greifenden Schieber die Reibflansche nur an der Außenseite der äußeren Scharnierlappen angespritzt werden, wobei die in eine der beiden Formräume für die Reibflansche eingespritzte Kunststoffschmelze die miteinander durch einen Schmelzedurchtritt im Schieber strömungsverbundenen Formräume für die Kunststoffbuchsen und Reibungsflansche nacheinander füllt, bevor nach einem Erstarren der Kunststoffschmelze der in der Schieberöffnung verbleibenden Anguss zwischen den Kunststoffbuchsen beim Entformen durch den Schieber abgeschert wird.

Der Erfindung liegt die Erkenntnis zugrunde, dass es für die Gangregulierung eines fünflappigen Brillenscharniers, aber auch für Brillenscharniere mit einer höheren Anzahl an Scharnierlappen ausreicht, die Reibflansche lediglich an der Außenseite der äußeren Scharnierlappen des drehbar auf der Scharnierschraube gelagerten, inneren Scharnierteils vorzusehen, weil ja im Wesentlichen nur die äußeren Scharnierlappen des die Scharnierschraube aufnehmenden äußeren Scharnierteils beim Anziehen der Scharnierschraube zueinander gezogen werden und damit an die Reibflansche der anliegenden äußeren Scharnierlappen des inneren Scharnierteils angedrückt werden. Mit der Beschränkung der Reibflanschanordnung auf die Außenseite der äußeren Scharnierlappen des inneren Scharnierteils ergeben sich für das Spritzen dieser Reibflansche Formbedingungen entsprechend dem Anspritzen der Reibflansche an einem einzigen, von beiden Seiten frei zugänglichen Scharnierlappen. Es muss lediglich für einen stirnseitigen Abschluss der Formräume für die Kunststoffbuchsen zwischen den Scharnierlappen und eine Strömungsverbindung für die Kunststoffschmelze zwischen diesen Formräumen gesorgt werden. Diese Aufgabe wird in einfacher Art durch einen Schieber gelöst, der die Formräume für die Kunststoffbuchsen zwischen den Scharnierlappen stirnseitig abschließt, aber einen Schmelzedurchtritt bildet, sodass die Kunststoffschmelze durch den Schieber vom Formraum des einen Scharnierlappens zum Formraum für die Kunststoffbuchse und den Reibflansch des anschießenden Scharnierlappens strömen kann.

Aufgrund des Umstands, dass der Schmelzedurchtritt zwischen den stirnseitigen Abschlüssen des Formraums für die Kunststoffbuchsen im Schieber vorgesehen ist, wird bei der Entformung des Scharnierteils mit dem Ausziehen des Schiebers aus dem Zwischenbereich zwischen zwei Scharnierlappen der im Schmelzedurchtritt erstarrte Anguss von den Stirnflächen der durch diesen Anguss verbundenen Kunststoffbuchsen abgeschert, sodass hierfür keine gesonderte Maßnahme erforderlich wird.

Um in jedem Fall zu verhindern, dass beim fertig montierten Brillenscharnier eine metallische Reibung zwischen den ineinandergreifenden metallischen Scharnierlappen der beiden Scharnierteile auftreten kann, können die Kunststoffbuchsen mit einem durch eine ringförmige Ausnehmung im Schieber bestimmten, axialen Überstand gespritzt werden, der innerhalb der Grenzen für die axiale elastische Verformbarkeit des Kunststoffes bei der Entformungstemperatur liegt. Wegen der Dimensionierung dieses Überstands in Abhängigkeit von den elastischen Eigenschaften der Kunststoffbuchsen während der Entformung, bedarf es zum Unterschied zur Entformung im Bereich der Reibflansche keiner gesonderten Entformungsmaßnahmen. Zur Entformung braucht also lediglich der Schieber herausgezogen zu werden, um den Anguss abzuscheren, wobei aufgrund der Elastizität des Kunststoffs keine Teilung des Schiebers erforderlich wird.

Ein erfindungsgemäßes Brillenscharnier umfasst zwei miteinander durch eine Scharnierschraube verbundene Scharnierteile, von denen der die Scharnierschraube in einem Gewinde eines äußeren Scharnierlappens aufnehmende äußere Scharnierteil wenigstens drei Scharnierlappen aufweist, zwischen denen die Scharnierlappen des anderen inneren Scharnierteils auf der Scharnierschraube als Scharnierachse drehbar gelagert sind, wobei sich der äußere Scharnierteil am inneren Scharnierteil über am inneren Scharnierteil angespritzte Reibflansche axial abstützt, die in Lageraugen der Scharnierlappen auskleidende Kunststoffbuchsen übergehen. Da lediglich die äußeren Scharnierlappen des inneren Scharnierteils auf der Außenseite die Reibflansche aufweisen, stehen die Kunststoffbuchsen auf der den Reibflanschen gegenüberliegenden Stirnseite geringfügig über das Lagerauge der Scharnierlappen vor, sodass eine Reibung zwischen den ineinandergreifenden metallischen Scharnierlappen der beiden Scharnierteile vermieden wird.

In der Zeichnung ist der Erfindungsgegenstand beispielsweise dargestellt. Es zeigen
- Fig. 1: ein erfindungsgemäßes Brillenscharnier in einem Axialschnitt,
- Fig. 2: ein Formwerkzeug zum Anspritzen der Reibflansche und Kunststoffbuchsen ausschnittsweise in einem vereinfachten Schnitt durch die Scharnierachse,
- Fig. 3: den in das Formwerkzeug eingesetzten inneren Scharnierteil in einem Axialschnitt in einem größeren Maßstab,
- Fig. 4: einen Schnitt nach der Linie IV-IV der Fig. 3,
- Fig. 5: eine der Fig. 3 entsprechende Darstellung nach dem Einspritzen des Kunststoffs und
- Fig. 6: eine der Fig. 5 entsprechende Darstellung nach dem Entformen des inneren Scharnierteils.

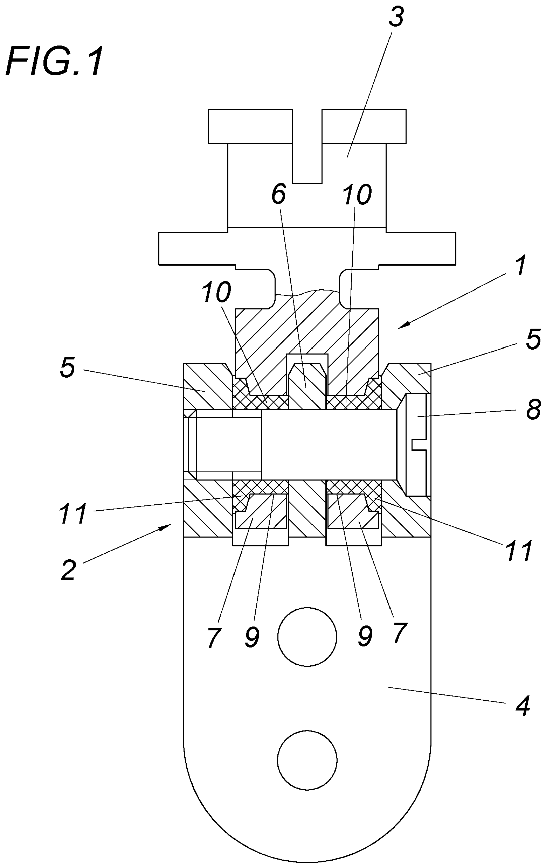

Ein erfindungsgemäßes Brillenscharnier weist gemäß Fig. 1 zwei metallische Scharnierteile 1, 2 auf, von denen ein Scharnierteil 1 mithilfe von Ankeransätzen 3 in einem Brillenrahmen verankerbar ist und der andere Scharnierteil 2 mittels einer Anschlagplatte 4 an einem Brillenbügel befestigt wird. Der äußere Scharnierteil 2 umfasst drei Scharnierlappen 5, 6, zwischen die die beiden Scharnierlappen 7 des inneren Scharnierteils 1 eingreifen. Die beiden Scharnierteile 1, 2 sind miteinander durch eine Scharnierschraube 8 verbunden, die mit ihrem Kopf an einem der äußeren Scharnierlappen 5 abgestützt ist, in eine Gewindebohrung im gegenüberliegenden Scharnierlappen 5 eingreift und die Scharnierlappen 7 des inneren Scharnierteils 1 in Lageraugen 9 durchsetzt. Diese Lageraugen 9 sind mit Kunststoffbuchsen 10 ausgekleidet, die auf der Außenseite der Scharnierlappen 7 in Reibflansche 11 übergehen. Da diese Reibflansche 11 axial über die Außenflächen der Scharnierlappen 7 vorstehen, werden die Reibflansche 11 durch die äußeren Scharnierlappen 5 des äußeren Scharnierteils 2 in Abhängigkeit vom Anzugmoment der Scharnierschraube 8 mit einer Vorspannkraft beaufschlagt, die die Gängigkeit des Brillenscharniers steuert. Die die Lageraugen 9 auskleidenden Kunststoffbüchsen 10 sichern nicht nur eine entsprechende Halterung der Reibflansche 11, sondern dienen auch zur weitgehend spielfreien Lagerung des inneren Scharnierteils 1 auf der die Scharnierachse bildenden Scharnierschraube 8.

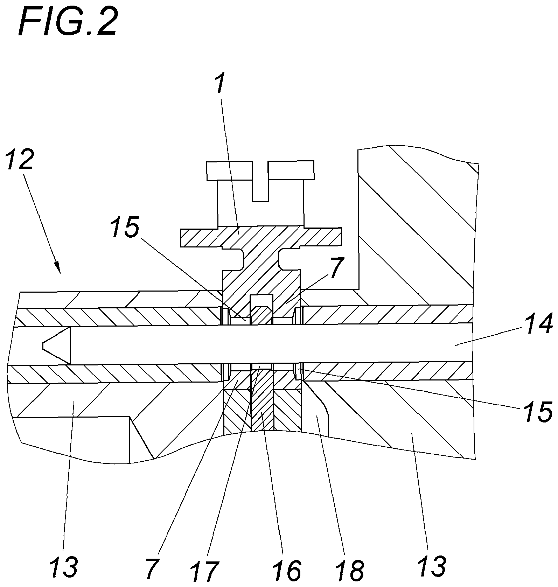

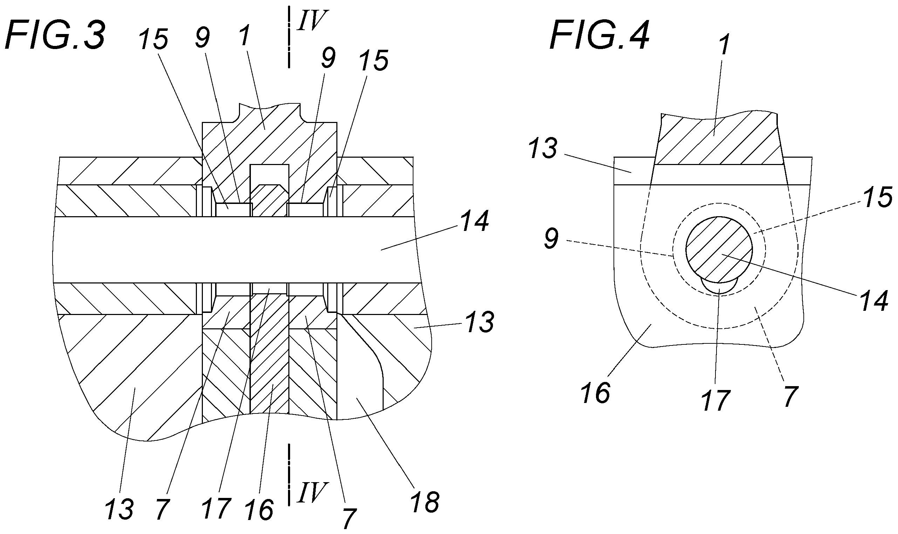

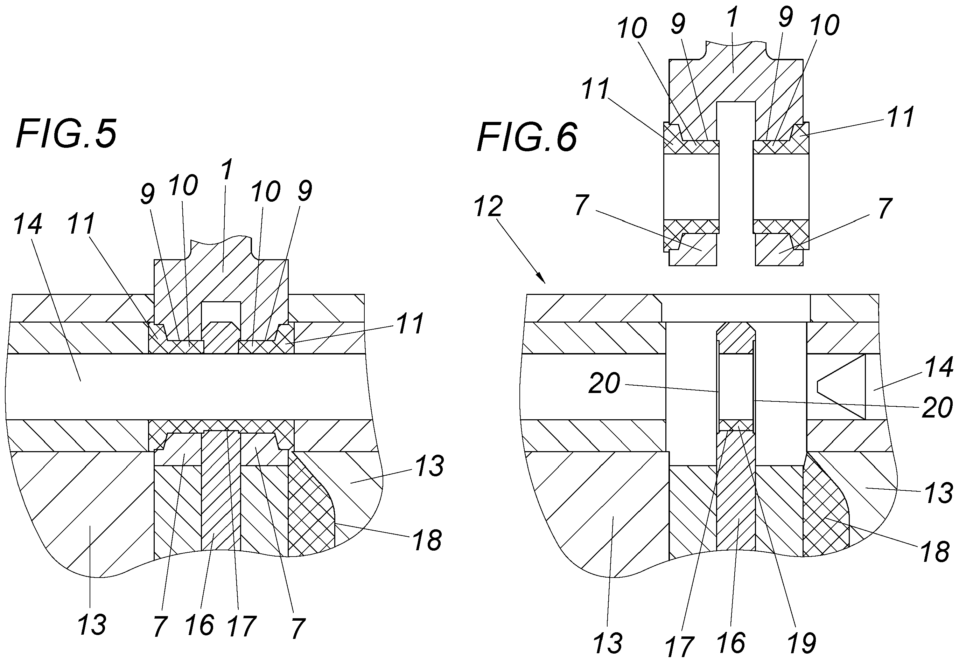

Um den inneren Scharnierteil 1 mit den Kunststoffbüchsen 10 und den Reibflanschen 11 versehen zu können, ist ein Formwerkzeug 12 vorgesehen, das üblicherweise für mehrere dieser Scharnierteile ausgelegt ist und zwei Formteile 13 umfasst, zwischen denen die Scharnierteile 1 aufgenommen werden, wie dies insbesondere den Fig. 2 bis 4 entnommen werden kann. Die beiden Formteile 13 schließen an den Außenflächen der beiden Scharnierlappen 7 an und bestimmen zusammen mit einem zylindrischen Formkern 14 entsprechende Formräume 15 zum Anspritzen der Kunststoffbuchsen 10 und Reibflansche 11. Auf der Innenseite der Scharnierlappen 7 werden die Formräume 15 für die Kunststoffbüchsen 10 stirnseitig durch einen Schieber 16 abgedeckt, der zwischen die beiden Scharnierlappen 7 ragt, an diesen dicht anliegt und vom Formkern 14 durchsetzt wird. Die Formräume 15 der beiden Scharnierlappen 7 für die Kunststoffbüchsen 10 sind miteinander stirnseitig durch einen im Schieber 16 vorgesehenen Schmelzedurchtritt 17 strömungsverbunden, sodass die Kunststoffschmelze durch einen an den Formraum 15 des einen Scharnierlappens 7 angeschlossenen Speisekanal 18 zunächst diesen Formraum 15 und anschließend durch den Schmelzedurchtritt 17 hindurch den Formraum 15 des gegenüberliegenden Scharnierlappens 7 füllt, um die Reibflansche 11 und die Kunststoffbüchsen 10 zu formen, wie dies in der Fig. 5 dargestellt ist.

Nach einem für das Entformen ausreichenden Erstarren der Kunststoffschmelze wird zum Entformen zunächst der zylindrische Formkern 14 aus dem Bereich des Scharnierteils 1 gezogen und die Formteile 13 geöffnet. Um den Schieber 16 aus dem Zwischenraum zwischen den beiden Scharnierlappen 7 zu lösen muss der Schieber 16 relativ zum Scharnierteil 1 verlagert werden, indem beispielsweise der Scharnierteil 1 aus dem geöffneten Formwerkzeug 12 gezogen wird. Wie aus Fig. 6 hervorgeht, wird dabei der im Schmelzedurchtritt 17 des Schiebers 16 verbleibende Anguss 19 von den Stirnflächen der Kunststoffbuchsen 10 abgetrennt, wobei eine Nachbearbeitung dieser Stirnflächen nicht erforderlich ist und der fertige Scharnierteil 1 dem Formwerkzeug 12 entnommen wird.

Um eine Anlage des mittleren Scharnierlappens 6 des äußeren Scharnierteils 2 an den Innenflächen der Scharnierlappen 7 des inneren Scharnierteils 1 zu unterbinden, können die Kunststoffbüchsen 10 stirnseitig über das Lagerauge 9 vorstehen, wie dies insbesondere in der Fig. 6 angedeutet ist. Zu diesem Zweck sind im Schieber 16 ringförmige Ausnehmungen 20 vorgesehen, deren Tiefe so bemessen ist, dass durch den stirnseitigen Überstand der Kunststoffbüchsen 10 die Entformung nicht behindert wird. Dies bedeutet, dass beim Entformen der Überstand elastisch so verformt werden muss, dass der Schieber 16 relativ zum Scharnierteil 1 zwischen den Scharnierlappen 7 über den Überstand hinweg herausziehbar sein muss. Der Überstand muss daher vergleichsweise gering ausfallen und ist aus Sichtgründen in der Zeichnung überproportional dargestellt.

Die Erfindung ist selbstverständlich nicht auf das dargestellte Ausführungsbeispiel beschränkt und kann insbesondere auch bei Brillenscharnieren mit mehr als fünf Scharnierlappen eingesetzt werden. In einem solchen Fall wird das Lagerauge des Scharnierlappens bzw. der Scharnierlappen zwischen den äußeren Scharnierlappen des inneren Scharnierteils mit einer Kunststoffbüchse ausgespritzt, und zwar wiederum mit Hilfe von Schiebern, die zwischen die Scharnierlappen des inneren Scharnierteils eingreifen und Schmelzedurchtritte für die Strömungsverbindung sicherstellen.

## Patentansprüche

1. Verfahren zum Herstellen eines Scharnierteils (1) eines Brillenscharniers mit wenigstens zwei Scharnierlappen (7), mit Scharnieraugen (9) der Scharnierlappen (7) auskleidenden Kunststoffbuchsen (10) und mit über die Scharnierlappen (7) vorstehenden Reibflanschen (11), wobei die Scharnieraugen (9) der Scharnierlappen (7) zur Ausbildung der Kunststoffbuchsen (10) und Reibflansche (11) in einem die ineinander übergehenden Formräume (15) für die Kunststoffbuchsen (10) und Reibflansche (11) vorgebenden Formwerkzeug (12) mit einer Kunststoffschmelze ausgespritzt werden, **dadurch gekennzeichnet, dass** bei einer stirnseitigen Abdeckung der Formräume (15) für die Kunststoffbuchsen (10) durch einen zwischen die Scharnierlappen (7) greifenden Schieber (16) die Reibflansche (11) nur an der Außenseite der äußeren Scharnierlappen (7) angespritzt werden, wobei die in eine der beiden Formräume (15) für die Reibflansche (11) eingespritzte Kunststoffschmelze die miteinander durch einen Schmelzedurchtritt (17) im Schieber (16) strömungsverbundenen Formräume (15) für die Kunststoffbuchsen (10) und Reibungsflansche (11) nacheinander füllt, bevor nach einem Erstarren der Kunststoffschmelze der im Schmelzedurchtritt (17) verbleibenden Anguss (19) zwischen den Kunststoffbuchsen (10) beim Entformen durch den Schieber (16) abgeschert wird.

2. Verfahren nach Anspruch 1, **dadurch gekennzeichnet, dass** die Kunststoffbuchsen (10) mit einem durch eine ringförmige Ausnehmung (20) im Schieber (16) bestimmten, axialen Überstand gespritzt werden, der innerhalb der Grenzen für die axiale elastische Verformbarkeit des Kunststoffes bei der Entformungstemperatur liegt.

3. Brillenscharnier aus zwei miteinander durch eine Scharnierschraube (8) verbundenen Scharnierteilen (1, 2), von denen der die Scharnierschraube (8) in einem Gewinde eines äußeren Scharnierlappens (5) aufnehmende äußere Scharnierteil (2) wenigstens drei Scharnierlappen (5, 6) aufweist, zwischen denen die Scharnierlappen (7) des anderen inneren Scharnierteils (1) auf der Scharnierschraube (8) als Scharnierachse drehbar gelagert sind, wobei sich der äußere Scharnierteil (2) am inneren Scharnierteil (1) über lediglich auf der Außenseite der äußeren Scharnierlappen (7) des inneren Scharnierteils (1) angespritzte Reibflansche (11) axial abstützt, die in Lageraugen (9) der Scharnierlappen (7) auskleidende Kunststoffbuchsen (10) übergehen, **dadurch gekennzeichnet, dass** die Kunststoffbuchsen (10) auf der den Reibflanschen (11) gegenüberliegenden Stirnseite über das Lagerauge (9) der Scharnierlappen (7) vorstehen.

## Claims

1. Method for producing a hinge part (1) of a spectacles hinge having at least two hinge plates (7), having synthetic material sleeves (10) which line hinge eyes (9) of the hinge plates (7), and having friction flanges (11) protruding beyond the hinge plates (7), wherein, in order to form the synthetic material sleeves (10) and friction flanges (11), the hinge eyes (9) of the hinge plates (7) are injected with a synthetic material melt in a mould tool (12) defining the mould chambers (15) - which merge into one another - for the synthetic material sleeves (10) and friction flanges (11), **characterised in that**, when the mould chambers (15) for the synthetic material sleeves (10) are covered on the end face by a slide (16) acting between the hinge plates (7), the friction flanges (11) are injected only on the outer side of the outer hinge plates (7), wherein the synthetic material melt injected into one of the two mould chambers (15) for the friction flanges (11) successively fills the mould chambers (15) for the synthetic material sleeves (10) and friction flanges (11), which mould chambers are connected to each other in terms of flow technology by a melt passage (17) in the slide (16), before the sprue (19) remaining in the melt passage (17) after solidification of the synthetic material melt is sheared off by the slide (16) between the synthetic material sleeves (10) during demoulding.

2. Method as claimed in claim 1, **characterised in that** the synthetic material sleeves (10) are injected with an axial excess length, determined by an annular recess (20) in the slide (16), which axial excess length is within the limits for the axial elastic deformability of the synthetic material at the demoulding temperature.

3. Spectacles hinge consisting of two hinge parts (1, 2) connected together by a hinge screw (8), of which the outer hinge part (2) receiving the hinge screw (8) in a thread of an outer hinge plate (5) comprises at least three hinge plates (5, 6), between which the hinge plates (7) of the other, inner hinge part (1) are mounted in a rotatable manner on the hinge screw (8) as a hinge spindle, wherein the outer hinge part (2) is axially supported on the inner hinge part (1) via friction flanges (11) injected merely onto the outer side of the outer hinge plates (7) of the inner hinge part (1), which friction flanges merge into synthetic material sleeves (10) lining bearing eyes (9) of the hinge plates (7), **characterised in that** the synthetic material sleeves (10) on the end face opposite the friction flanges (11) protrude beyond the bearing eye (9) of the hinge plates (7).

## Revendications

1. Procédé de fabrication d'une partie de charnière (1) d'une charnière de lunettes comprenant au moins deux pattes de charnière (7), des douilles de plastique (10) pour garnir les yeux de charnière (9) des pattes de charnière (7) et des brides de frottement (11) faisant saillie sur les pattes de charnière (7), dans lequel une matière plastique fondue est injectée à l'intérieur des yeux de charnière (9) des pattes de charnière (7) de manière à former les douilles de plastique (10) et les brides de frottement (11) dans un outil de moulage (12) définissant des espaces de moulage (15) qui s'emboîtent les uns dans les autres pour les douilles de plastique (10) et les brides de frottement (11), **caractérisé en ce que en ce que**, pendant un recouvrement frontal des espaces de moulage (15) pour les douilles de plastique (10) par un coulisseau (16) qui s'engage entre les pattes de charnière (7), les brides de frottement (11) sont moulées par injection uniquement sur le côté extérieur des pattes de charnière extérieures (7), et dans lequel la matière plastique fondue injectée à l'intérieur de l'un des deux espaces de moulage (15) pour les brides de frottement (11) remplit successivement les espaces de moulage (15) pour les douilles de plastique (10) et les brides de frottement (11) qui sont reliés entre eux par l'intermédiaire d'un passage de matière fondue (17) dans le coulisseau (16), avant qu'après une solidification de la matière plastique fondue, la carotte (19) qui reste à l'intérieur du passage de matière fondue (17) entre les douilles de plastique (10) soit cisaillée par le coulisseau (16) au moment du démoulage.

2. Procédé selon la revendication 1, **caractérisé en ce que** les douilles de plastique (10) sont moulées par injection avec un dépassement axial qui est déterminé par un évidement annulaire (20) dans le coulisseau (16) et qui se situe à l'intérieur des limites de déformabilité élastique axiale de la matière plastique à la température de démoulage.

3. Charnière de lunettes constituée de deux parties de charnière (1, 2) qui sont connectées l'une à l'autre par l'intermédiaire d'une vis de charnière (8), parmi lesquelles la partie de charnière extérieure (2), qui reçoit la vis de charnière (8) dans le filet d'une patte de charnière extérieure (5), comprend au moins trois pattes de charnière (5, 6) entre lesquelles les pattes de charnière (7) de la partie de charnière intérieure (1) sont montées de façon rotative sur la vis de charnière (8) qui fait office d'axe de charnière, et dans laquelle la partie de charnière extérieure (2) s'appuie axialement sur la partie de charnière intérieure (1) par l'intermédiaire de brides de frottement (11) qui sont moulées par injection uniquement sur le côté extérieur des pattes de charnière extérieures (7) de la partie de charnière intérieure (1) et qui sont prolongées par des douilles de plastique (10) garnissant des oeillets de palier (9) des pattes de charnière (7), **caractérisée en ce que** les douilles de plastique (10) dépassent de l'œil de palier (9) des pattes de charnière (7) sur la face avant opposée aux brides de frottement (11).
